# EUROPEAN PATENT SPECIFICATION

(11) **EP 1 747 111 B1**
(45) Date of publication and mention of the grant of the patent: **15.07.2009**
(21) Application number: 05749145.8
(22) Date of filing: 12.05.2005
(51) Int. Cl.: B60K 15/03, B60K 15/077

(54) **FUEL SYSTEM**
BRENNSTOFFSYSTEM
SYSTEME DE CARBURANT

(30) Priority: 13.05.2004 FR 0405222
(43) Date of publication of application: 31.01.2007
(73) Proprietor: Inergy Automotive Systems Research (Société Anonyme), 1120 Bruxelles (BE)
(72) Inventor: POTIER, Vincent, B-1190 BRUXELLES (BE); LACOME, Pierre, F-53200 Chemaze (FR); RIVIERE, Eric, F-53360 SAINT SULPICE (FR)
(74) Representative: Jacques, Philippe
(86) International application number: PCT/EP2005/052194
(87) International publication number: WO 2005/113278

(56) References cited:
- EP-A- 0 976 602
- DE-A1- 2 740 229
- US-B1- 6 209 594
- PATENT ABSTRACTS OF JAPAN vol. 1998, no. 01, 30 January 1998 (1998-01-30) -& JP 09 226389 A (YACHIYO KOGYO KK), 2 September 1997 (1997-09-02)

## Description

The invention relates to the supply of internal combustion engines with liquid fuels. It relates more especially to a fuel system intended for such engines, this fuel system being able to be used both for engines supplied with volatile liquid fuels or for engines supplied with heavy liquid fuels such as those sometime called, depending on the country and the region, by the terms "diesel" or "on-road diesel" or "gasoil". The invention also relates to a process for manufacturing such a system.

In internal-combustion vehicles, in particular in motor vehicles, the fuel system includes at the present time, apart from the tank for storing the fuel; a number of accessories. Among these accessories are *inter alia* fuel supply lines, venting valves, active-carbon canisters for vapour absorption, filters, pumps, gauges, pressure regulators and filler tubes.

Document DE 2740229 describes a filler tube ending with a box (Kombidose), the fastening of this box at the top of the tank also having the function of fastening the pump to the top of the tank. There is no mention in this document of the fastening of a filter or a pressure regulator to this box. Besides, since the box is at the top of the tank and not at its bottom, it cannot act as fuel trap for the pump, since that would increase the risk of pump cavitation during hot temperature conditions.

With regard more particularly to pump/filter/fuel trap units, the tendency is to integrate them into a single module which is fastened inside the actual fuel tank, such as for example described in Application EP 758 589 in the name of Solvay. It is also possible to integrate into this module at least one gauge and/or a pressure regulator and/or a valve, and also at least one electrical connection and/or at least one connection intended for the flow of a fluid, as described in the abovementioned application. However, mounting this module in the body of the tank remains a tricky operation, which is often carried out in line with the fuel tank manufacture. This involves the storage and transportation of a bulky unit to the assembly lines of motor vehicle manufacturers. Furthermore, the increasing complexity of the geometry of the filler tubes is such that these components are often produced separately and not as one piece with the tank, thereby involving a second assembly operation.

Application EP 0976602, which discloses the preamble of claim 1, describes a fuel system comprising a fuel tank, a filler pipe for filling the tank and a pump for supplying the engine with fuel, the pump being fastened to the filler pipe, whereby a fuel trap is integrated to the filler pipe, said fuel trap lying at the bottom of the fuel tank and comprising the fuel pump inside of it. EP '602 also describes a process for manufacturing a fuel system according to the preamble of claim 10.

Patent US 4919103 describes a fuel system comprising a fuel tank, a partitioning wall provided within the fuel tank to define a fuel storage chamber within the fuel tank, a canister container housed in the small fuel storage chamber, the canister container storing therein a fuel adsorbing material. When fuel feeding takes place, feeding fuel is introduced into the small fuel storage chamber to cool the canister container.

The object of the present invention is therefore to provide a fuel system having an improved architecture, making it possible to save at least one assembly operation and/or at least one additional part. According to certain aspects, the present invention also makes it possible to reduce the volume of the parts to be transported to the assembly line for the machine (for example a motor vehicle) for which the system is intended.

For this purpose, the present invention relates to a fuel system intended for an internal combustion engine and comprising a fuel tank, a filler tube for filling the tank and a pump for supplying the engine with fuel, the pump being fastened to the filler tube and a fuel trap being integrated to the filler tube, said fuel trap lying at the bottom of the fuel tank and comprising the fuel pump inside or on top of it.

This procedure makes it possible to pre-assemble the filler tube with the pump and the fuel trap, and then to fix the assembly at the bottom of the fuel tank, thereby eliminating at least one assembly step. Besides, such a bottom assembly allows a side insertion of the integrated module instead of a top insertion, which is quite convenient for horizontal, flat tanks requiring flat modules.

The fuel system according to the invention is suitable both for internal combustion engines supplied with volatile liquid fuels and for engines supplied with heavy liquid fuels, such as those mentioned above. In the present description, the fuel system is an assembly of elements that are intended to be incorporated into an automotive vehicle or into a stationary motor installation. The automotive vehicle may be a motor vehicle (a car, lorry, motorcycle, river boat, sea-going ship, or aeroplane for example) or a vehicle constrained to run on a track (for example a railway locomotive). The stationary drive unit may for example be the motor of an electric power generator set or the motor of a machine tool.

The term "fuel" is intended to mean a hydrocarbon suitable for internal combustion engines. The term "liquid hydrocarbon" denotes a hydrocarbon which, under normal operating conditions of the engine, is in the liquid state in the fuel tank of the fuel system.

The expression "volatile liquid hydrocarbon" denotes a liquid hydrocarbon (under the above definition) which has a saturation vapour pressure of greater than 1 bar at 293 K (20°C). Volatile liquid hydrocarbons commonly used for internal combustion engines of motor vehicles are those sold commercially under the name "petrol" and intended for spark-ignition internal combustion engines.

The expression "heavy liquid hydrocarbon" denotes a liquid hydrocarbon that has a saturation vapour pressure below 1 bar at 293 K (20°C). Heavy liquid hydrocarbons commonly used for internal combustion engines of motor vehicles are those sold commercially under the names "diesel" or "gasoil" and intended for self-ignition internal combustion engines operating according to a diesel cycle.

According to the invention, the elements of the fuel system are made of a material compatible with each of the liquid hydrocarbons that it is likely to deal with. This material must be chemically inert both with respect to volatile liquid hydrocarbons and to heavy liquid hydrocarbons at the usual operating pressures and temperatures. It may be a plastic or a metal. The elements of the system according to the invention may also be hybrid, that is to say they may comprise metal parts and plastic parts.

Within the context of the invention, thermoplastics give good results at least for the fuel tank, especially because of weight, strength, chemical resistance and easier processing advantages, in particular when the elements of the system have complex shapes.

The term "thermoplastic" denotes any thermoplastic polymer, including thermoplastic elastomers, as well as blends thereof. The term "polymer" denotes both homopolymers and copolymers (especially binary or ternary copolymers). Examples of such copolymers are, non-limitingly: random copolymers, linear block copolymers, other block copolymers and graft copolymers.

Any type of thermoplastic polymer or copolymer whose melting point is below the decomposition temperature is suitable. Synthetic thermoplastics that have a melting range spread over at least 10 degrees Celsius are particularly suitable. Examples of such materials include those that exhibit polydispersion in their molecular weight.

In particular, polyolefins, polyvinyl halides, thermoplastic polyesters, polykeytones, polyamides and copolymers thereof may be used. A blend of polymers or copolymers may also be used, likewise a blend of polymeric materials with inorganic, organic and/or natural fillers such as, for example, but not limitingly: carbon, salts and other inorganic derivatives, natural fibres, glass fibres and polymeric fibres. It is also possible to use multilayer structures consisting of stacked layers bonded together, comprising at least one of the polymers or copolymers described above.

Polyvinyl halides and polyolefins are generally preferred. A polymer often employed is polyethylene. Excellent results have been obtained with high-density polyethylene (HDPE). As is known, the impermeability of this plastic to volatile hydrocarbons may be improved by a surface treatment (fluorination, sulphonation, etc.) and/or by the use of a barrier layer (for example based on a polyamide (PA) or on a vinyl alcohol polymer [a homopolymer (PVOH) or an ethylene/vinyl alcohol copolymer (EVOH)]).

Preferably, at least the tank of the system according to the invention is made of a thermoplastic and preferably includes HDPE. More preferably, the tank is a multilayer structure that includes at least one layer based on HDPE and at least one layer based on EVOH (the term "based on" may mean "principally consisting of", it being understood that these layers may include other polymers and/or additives in minor amounts (by weight)). The pump of the fuel system according to the invention may also include a plastic (HDPE) casing.

As for the filler tube, it may be in plastic, but on the North American market namely, it is mostly made of metal (for security and economical reasons).

According to the invention, the pump is fastened to the filler tube, inside or on top of a fuel trap located at the bottom of the latter. This is done by any suitable means (welding, adhesive bonding, snap-fastening into a socket, riveting, etc.), preferably by snap-fastening. For this purpose, the bottom of the filler tube advantageously has a shape that is suitable for forming a universal base, whatever the type of pump used.

According to the invention, the fuel trap (device in or on which the pump is located and serving to capture and retain the fuel so as to prevent the pump from running dry, and so guaranteeing that the pump is primed after the vehicle has run out of fuel) is fastened to and/or included in the filler tube, at the bottom of it (for convenience, these variants will hereafter be denoted in common by the term "integrated"). The advantage of having the fuel trap located at the bottom of the filler tube is that the use of a fill valve (for filling said trap after the engine has run dry) can be omitted since said fuel trap is automatically filled with fuel during refuelling.

According to one particularly advantageous variant of the present invention, the pump rests on foam, which reduces the transmission of pump noise. This foam then acts as (at least part of the) fuel trap and thus replaces the conventional systems that are based on a venturi (jet pump) and are subject to risks of the pump being blocked due to the presence of foreign bodies in the tank. In such systems (which are also part of the invention, although less preferred), a reservoir is acting as fuel trap, which reservoir is being filled through said jet pump.

According to a preferred variant of the present invention, the filler tube comprises a filling neck and a base (or part of suitable shape for inserting/fastening the pump thereat and which integrates the fuel trap), these two parts defining the internal portion of the tube. According to the invention, the tube may also include an external portion, i.e. at least one part attached to (i.e. fastened to or produced as one part with) the neck and/or the base and defining a volume external to them. An external part being fixed to the neck gives good results.

The internal and external portions (where appropriate) may either be moulded as one piece or moulded separately and pre-assembled before the assembly is fitted onto the tank (usually by inserting the lower part containing the pump and the fuel trap in an opening through the tank wall and then, tightly fixing the tube on said opening). Likewise, the filling neck and the base of the tube may be moulded as one piece, or separately, and assembled before being fitted onto the tank.

These parts (neck and base) may be assembled directly one to another. Alternatively, a connecting piece can be inserted between both. The use of a connecting piece (in the form of a bellows for instance) may enhance the ease of insertion of the lower part of the filler tube inside the opening of the tank wall. It may also provide means for installing the pump more in the center of the tank (instead of close to the tank wall).

According to the present invention, other accessories may be integrated into the filler tube. More particularly, apart from the pump and the fuel trap, at least one other accessory intended for supplying the engine with fuel and/or for checking the fuel level in the tank, is preferably integrated into the internal part of the tubing. This integration may be accomplished either by direct integration into the tube, as described above, or by fixing to, in or onto an element already integrated thereinto.

The concept of the invention may for example extend to the fuel filter, which is also advantageously located at the lower part of the filler tube. More particularly, according to a variant of the invention, it is possible to use, as pump, an integrated pump/filter module. Alternatively, it is possible to use two separate elements that are assembled before, after or during their attachment to the tube.

The filler tube also advantageously incorporates at its bottom, a pressure regulator, allowing the engine to be supplied with fuel at the desired pressure.

The concept may also extend to a gauging system for the fuel contained in the tank, i.e. via an integrated module or via a separate gauging system. Thus, for example, it is possible to use, as pump, an integrated pump/gauge module such as those commonly used in the motor vehicle field and in which the gauging system comprises an arm and a float. However, given the inaccuracies generally associated with this type of gauging, it will be preferred to use a separate gauging system, based on another principle. Gauging systems based on weighing or based on inductive methods or the Hall effect give good results. Thus, according to a preferred variant of the present invention, a gauging system based on weighing, on an inductive effect or on a Hall effect is connected to the pump. In particular, the inductive gauging system called SENSOPAD^{®} gives good results.

Finally, the filler tube may incorporate other accessories at its bottom, such as valves (for example a non-return valve and/or overfilling prevention valve), a jet pump (for instance in the case the fuel trap does not include a foam but merely consists of a reservoir which must be filled in low fuel conditions by means of said jet pump), etc. The integration of a jet pump in a fuel system according to the invention is an easy way to install a jet pump in a fuel tank since again, side insertion is often much easier than top or bottom insertion.

The filler tube may also incorporate at least one element of the ventilation circuit (connecting the top of the tank to the canister) and/or of the venting circuit (connecting the top of the tank to the top of the filler tube), such as one or more canisters, one or more liquid/vapour separators, one or more valves, etc. This element is preferably integrated into an external part of the tube and more particularly, into an external part fixed to the filling neck part of the tube (i.e not at its bottom, but rather next to the top of it).

The fuel pump of the above described fuel system is intended to supply an internal combustion engine with fuel through a fuel feed line and it generally requires electrical connections to operate it. According to a preferred embodiment of the present invention, said feed line and connections of the fuel pump are passing through a separate flange on top of the tank. The security of the system can hence easily be ensured by placing said flange in a crash resistant part of the fuel tank.

The present invention also relates to a process for manufacturing a fuel system as described above. This process comprises the following steps :
1. manufacture of a fuel tank ;
2. manufacture of a filler tube for said tank , which filler tube integrates a fuel trap at its bottom ;
3. fastening of a fuel supply pump to the bottom of the said tube, inside or on top of the fuel trap ; and
4. assembly of the tube/pump/fuel trap unit to the fuel tank in a way such that the fuel trap is lying at the bottom of the fuel tank.

In this process, step 4 is effectively the last step, and step 2 must be carried out before step 3. In contrast, step 1 and steps 2 and 3 may be reversed. In fact, as mentioned above, one of the objects of the present invention is to allow the production of filler tubes in specialized production units, while the blow-moulding of the tanks and the assembling of the two parts are carried out in units close to customer (motor vehicle manufacture) lines. What is consequently advantageous is to be able to fit onto a tank a filler tube that incorporates the maximum number of accessories, at least part of the latter (the pump and the fuel trap) being inserted into a side opening of the tank lying close to its bottom.

The manufacture of the tank and of the tube is advantageously carried out by moulding and, if these parts are based on a thermoplastic, they are advantageously produced by extrusion/blow-moulding. Thus, according to a preferred variant, at least the tank is produced by extrusion/blow-moulding and in particular by coextrusion-blow moulding (in the preferred variant described above, in which the tank is a multilayer structure). This technique, which is moreover well known to those skilled in the art, consists in extruding a multilayer parison and in blow-moulding it. It should be noted that in the case of the filler pipe, when a base is present, this is advantageously produced by injection-moulding.

The fastening of the pump to the tube (inside or on top of the fuel trap) and of the tube to the tank may be carried out by any known means. The means for fastening the pump to the tube have been described above. These same means may apply to the fastening of the other accessories described above to the tube (in its internal or external portion). As regards the fastening of the assembly to the tank (i.e. the tight fixing onto an opening of the tank wall after insertion of the pump/fuel trap as mentioned above), this may also be carried out in various ways (welding, adhesive bonding, mechanical fastening (fastened strap, hose clamps, rivets, bolts, etc.)). This assembly is, of course, a sealed assembly, optionally produced by using seals or other sealing devices. Preferably, the assembly operation is carried out by thermal welding or by mechanical bonding using screws, bolts, a ring, a bayonet system, etc.

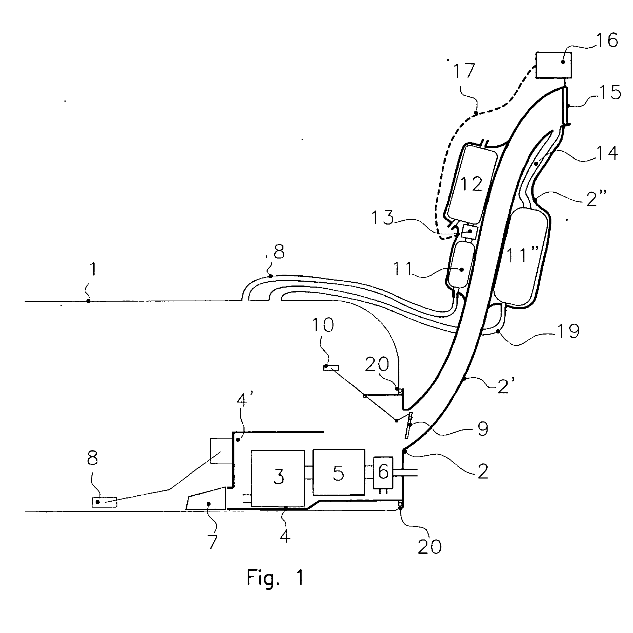

The present invention will be illustrated in a non-limiting manner by Figures 1 to 4 which are diagrams showing the principle of certain preferred embodiments of the present invention.

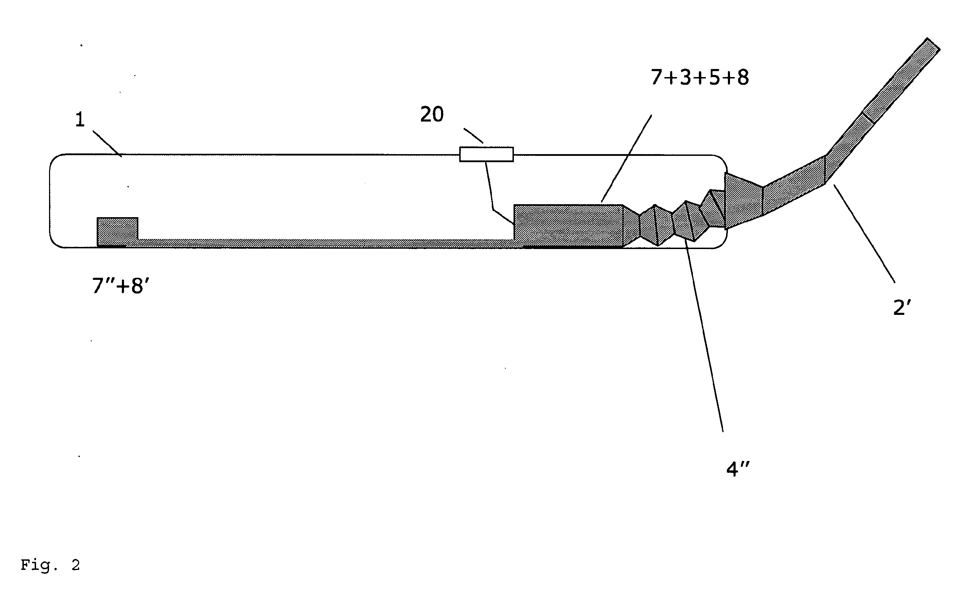

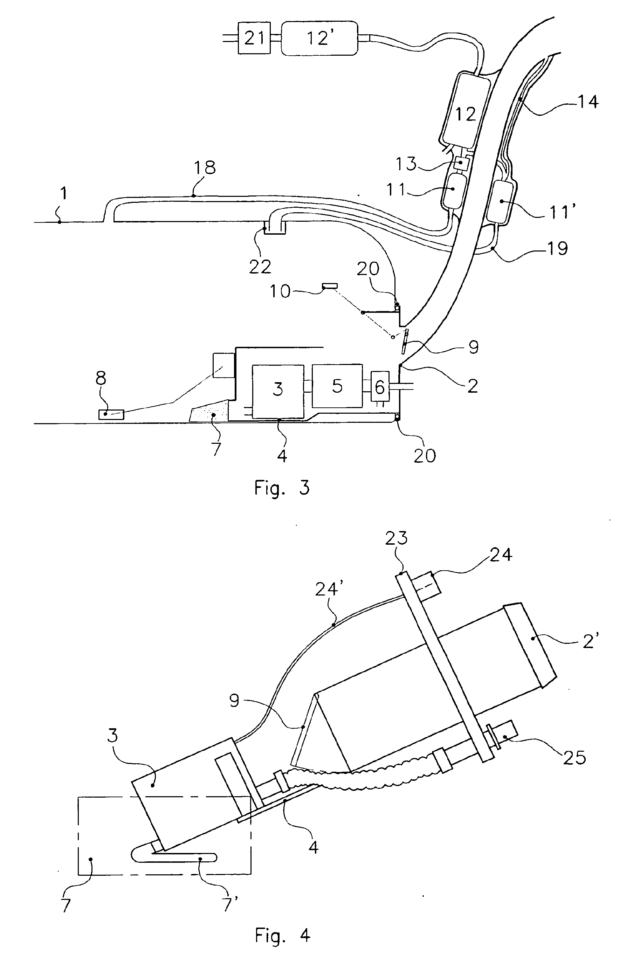

Figure 1 illustrates a particular architecture that may be suitable for the European market and Figure 3 illustrates an embodiment best suited for the North American market. Figure 2 illustrates part of another architecture, which suits both markets. Figure 4 relates to a particular way of fastening the pump to the tube. In these figures, identical numerals denote identical components/- accessories.

Figure 1 illustrates a fuel system comprising a fuel tank (1), a filler tube (2) (which is shown in bold in the figure and comprises a filling neck (2'), an external jacket (2") and a base (4), these parts being moulded separately, (the tube being blow-moulded from a single part, and the base being injection-moulded) and then assembled), and a pump (3). The base (4) defines a hollow volume (4'), lying in the extension of the neck (2'), inside which space the pump (3) has been inserted and fixed. This pump (3) is connected to a pressure regulator (6) via a filter (5), the regulator (6) and the filter (5) being also inserted and fastened to the base (4) by snap-fastening, the filter also being welded to the pump (3). The pump rests on foam (7), which acts as fuel prefilter and trap. A fuel gauge (8) comprising an arm and a float is also fastened to the base (4) and inserted into the fuel tank (1) at the same time as the base (4), when the tube (2) is being fitted onto the tank (1). A filling control device (valve) (9) is fastened onto the end of the filling neck (2'). This valve (9) is actuated by an arm and a float (10). The aforementioned accessories, which are intended for supplying the engine with fuel and/or for controlling the fuel level in the tank, are therefore integrated into the internal portion (2') of the filler tube (2).

This tube (2) also includes an external portion (2") which itself comprises elements of the ventilation and venting circuit, namely :
- a canister (12) designed to adsorb the fuel vapour, in normal operation and when the tank (1) is being filled;
- two liquid/vapour separators (11, 11') intended for the ventilation circuit (connecting the top of the tank (1) and the canister (12)) and for the venting circuit (connecting the top of the tank (1) and the top of the filling neck (2')), respectively;
- a valve (13) located between the liquid/vapour (L/V) separator (11) and the canister (12), which valve closes when the vehicle rolls over (an ROV valve using the term of those skilled in the art); furthermore, this valve may also provide the overfilling prevention function (and act as an OPV) in the case in which the fuel system is not provided with the abovementioned valve (9)/float (10) device; and
- a line (14) connecting the L/V separator (11') of the venting circuit to the top of the filling neck (2').

Finally, the filler tube (2) is provided with a capless closure device (15), i.e. an automatic closure device (as opposed to a conventional system with a screw cap) which is actuated by an actuator (16) that can also operate the valve (13) (shown symbolically by the dotted line (17) in the figure). In this way, when the closure device (15) is opened, it is possible to close the valve (13) directly and to prevent overfilling.

All the aforementioned accessories (2 to 16) are integrated into (fastened to) the filler tube (2) before the said tube (2) is assembled with the tank (1). The tank (1) itself is fastened to the ventilation (18) and venting (19) tubes. After the tube (2) has been assembled with the tank (1), by welding or mechanical fastening (20) of the base (4) into an opening in the tank (1), the ventilation (18) and venting (19) tubes are connected to their respective L/V separator (11, 11').

This procedure makes it possible to manufacture, in specialized units for fuel systems, only the tube provided with its accessories and to shift, in "simple" units, close to the lines for mounting the said systems, the manufacture of the tank provided with its ventilation and venting tubes, a bulky assembly but relatively simple to manufacture.

Figure 2 illustrates the lower part of another architecture using a reservoir (7) as fuel trap instead of a foam. Said reservoir (7) is a hollow volume which is part of the base and which integrates a fuel pump (3), a fuel filter (5) and a gauge (8). It is connected on one side to the filling neck (2') by a connecting piece in form of a bellows (4") and on the other side, to a module integrating a jet pump (7") and a gauge (8'). It is also connected to a flange (20) located at the top of the tank (1) and through which fuel feed line and/or electrical connection(s) may extend (not shown).

Figure 3 is adapted to conventional North American systems which are provided with an ORVR (On-Board Refuelling Vapour Recovery) system as required by the U.S. regulations. Such a system needs a second canister (12') to be able to adsorb all the vapour generated during filling, and also a leak detection sensor (21) or OBD (On-Board Diagnosis) device and an FLVV (Fill Limit Vent Valve) (22), i.e. a valve that prevents liquid from passing from the tank into the filler tube (19) or to the outside in the event of the said tube being torn. It should be noted that the presence of the liquid/vapour separator (11') makes it possible to simplify (make less critical) this valve compared with the systems conventionally used in this region of the world.

Finally, Figure 4 illustrates a variant that is substantially different from the previous ones in that the actual filler tube is essentially formed from a filling neck (2') and from a base (4), the other parts being attached (fastened) to this neck and not moulded as one piece with it. In this variant, the pump (3) rests on foam (7), which includes a separate prefilter (7'), and it supplies the engine with fuel via a specific pipe (25). The pump (3) is fastened to the tube (2) by means of a weld to the base (4) and by means of a flange (23) that is welded to the neck (2'). This flange has an opening for the pipe (25) and also an electrical connection (24, 24') for the pump (3). The bottom of the neck (2') includes a non-return valve (9). This valve makes it possible to limit back flow or spillage at the end of filling due to the low triggering reactivity of the filling nozzle. This integrated system is very suitable for the connection of an alternative gauging system as mentioned previously (for example one based on weighing or an inductive effect).

## Claims

1. Fuel system intended for an internal combustion engine and comprising a fuel tank (1), a filler tube (2) for filling the tank and a pump (3) for supplying the engine with fuel, the pump (3) being fastened to the filler tube (2) which integrates a fuel trap (7) which is lying at the bottom of the fuel tank (1) and comprises the fuel pump (3) inside or on top of it, **characterized in that** the filler tube (2)/pump (3)/fuel trap (7) are preassembled as a unit which is fixed tightly onto a side opening of the tank (1) lying close to its bottom after insertion of the pump (3) and the fuel trap (7) through said opening.

2. Fuel system according to the preceding claim, **characterized in that** the tank (1) is made of plastic and the filler tube (2) is made of metal.

3. Fuel system according to the preceding claim, **characterized in that** the tank (1) is a multilayer structure that includes at least one layer based on HDPE (high-density polyethylene) and at least one layer based on EVOH (ethylene/vinyl alcohol copolymer).

4. Fuel system according to any one of the preceding claims, **characterized in that** the fuel trap (7) comprises a foam on which the pump (3) rests.

5. Fuel system according to any one of the preceding claims, **characterized in that** the filler tube (2) comprises a filling neck (2') and a base (4) integrating the fuel trap (7) which define the internal portion of the filler tube (2), and **in that** this internal portion of the filler tube (2) integrates, as well as the pump (3), at least one other accessory intended for supplying the engine with fuel and/or for checking the fuel level in the tank.

6. Fuel system according to the preceding claim, **characterized in that** this other element is chosen from a fuel filter (5), a pressure regulator (6), a jet pump (7") and/or a gauging system (8).

7. Fuel system according to the preceding claim, **characterized in that** this other element is a gauging system (8) that is connected to the pump (3), and **in that** this system is based on weighing, on an inductive effect or on a Hall effect.

8. Fuel system according to any one of Claims 5 to 7, **characterized in that** the flier tube (2) includes an external volume (2") bonded by a part attached to the neck (2') and/or to the base (4) and **in that** this external volume (2") incorporates at least one element of the ventilation circuit and/or of the venting circuit.

9. Fuel system according to any one of Claims 5 to 8, **characterized in that** the tank comprises a separate flange (20) on top of it through which a fuel feed line and/or electrical connections of the fuel pump (3) are extending.

10. Process for manufacturing a fuel system according to any one of the preceding claims, comprising the following steps:
1. manufacture of a fuel tank (1);
2. manufacture of a filler tube (2) for said tank (1), which filler tube (2) integrates a fuel trap (7) at its bottom ;
3. fastening of a fuel supply pump (3) to the bottom of the said filler tube (2), inside or on top of the fuel trap (7); and
4. assembly of the tube (2)/pump (3)/fuel trap (7) unit to the fuel tank (1) in a way such that the fuel trap (7) is lying at the bottom of the fuel tank (1)
**characterized in that** the filler tube (2)/pump (3)/fuel trap (7) assembly is fixed tightly onto a side opening of the tank (1) lying close to its bottom after insertion of the pump (3) and the fuel trap (7) through said opening.

## Patentansprüche

1. Kraftstoffsystem für einen Verbrennungsmotor, das einen Kraftstofftank (1), ein Einfüllrohr (2) zum Befüllen des Tanks sowie eine Pumpe (3) zum Versorgen des Motors mit Kraftstoff umfasst, wobei die Pumpe (3) am Einfüllrohr (2) befestigt ist, das eine darin integrierte Kraftstofffalle (7) aufweist, die am Boden des Kraftstofftanks (1) liegt und die Kraftstoffpumpe (3) umfasst, die im Inneren des Tanks oder oben daran vorgesehen ist, **dadurch gekennzeichnet, dass** das Einfüllrohr (2)/die Pumpe (3)/die Kraftstofffalle (7) als eine Einheit vormontiert sind, die an einer seitlichen Öffnung des Tanks (1) in der Nähe seines Bodens fest fixiert wird, nachdem die Pumpe (3) und die Kraftstofffalle (7) durch diese Öffnung eingeführt wurden.

2. Kraftstoffsystem nach dem vorstehend aufgeführten Anspruch, **dadurch gekennzeichnet, dass** der Tank (1) aus Kunststoff und das Einfüllrohr (2) aus Metall besteht.

3. Kraftstoffsystem nach dem vorstehend aufgeführten Anspruch, **dadurch gekennzeichnet, dass** der Tank (1) eine mehrschichtige Konstruktion ist, die mindestens eine Schicht auf der Basis von HDPE (Polyethylen hoher Dichte) und mindestens eine Schicht auf der Basis von EVOH (Ethylen/Vinylalkohol-Copolymer) beinhaltet.

4. Kraftstoffsystem nach einem der vorstehend aufgeführten Ansprüche, **dadurch gekennzeichnet, dass** die Kraftstofffalle (7) einen Schaum umfasst, auf dem die Pumpe (3) ruht.

5. Kraftstoffsystem nach einem der vorstehend aufgeführten Ansprüche, **dadurch gekennzeichnet, dass** das Einfüllrohr (2) einen Einfüllstutzen (2') und eine Basis (4) mit der darin integrierten Kraftstofffalle (7) umfasst, die den internen Abschnitt des Einfüllrohrs (2) definieren, und dass dieser interne Abschnitt des Einfüllrohrs (2), abgesehen von der Pumpe (3), mindestens ein anderes darin integriertes Zubehörteil aufweist, mit dem der Motor mit Kraftstoff versorgt und/oder der Kraftstoffstand im Tank geprüft werden kann.

6. Kraftstoffsystem nach dem vorstehend aufgeführten Anspruch, **dadurch gekennzeichnet, dass** es sich bei diesem anderen Element um einen Kraftstofffilter (5), einen Druckregler (6), eine Strahlpumpe (7") und/oder ein Messsystem (8) handelt.

7. Kraftstoffsystem nach dem vorstehend aufgeführten Anspruch, **dadurch gekennzeichnet, dass** dieses andere Element ein mit der Pumpe (3) verbundenes Messsystem (8) ist und dass dieses System auf Gewichtsbasis, auf der Basis eines induktiven Effekts oder auf der Basis eines Hall'schen Effekts arbeitet.

8. Kraftstoffsystem nach einem der Ansprüche 5 bis 7, **dadurch gekennzeichnet, dass** das Einfüllrohr (2) ein externes Volumen (2") beinhaltet, das von einem am Stutzen (2') und/oder an der Basis (4) befestigten Teil begrenzt ist, und dass dieses externe Volumen (2") mindestens ein Element des Belüftungskreislaufs und/oder des Entlüftungskreislaufs beinhaltet.

9. Kraftstoffsystem nach einem der Ansprüche 5 bis 8, **dadurch gekennzeichnet, dass** der Tank einen oben daran vorgesehenen separaten Flansch (20) umfasst, durch den sich eine Kraftstoffversorgungsleitung und/oder elektrische Verbindungen der Kraftstoffpumpe (3) erstrecken.

10. Verfahren zur Herstellung eines Kraftstoffsystems nach einem der vorstehend aufgeführten Ansprüche, wobei das Verfahren folgende Schritte umfasst :
1. Herstellen eines Kraftstofftanks(1) ;
2. Herstellen eines Einfüllrohrs (2) für den Tank (1), wobei das Einfüllrohr (2) an seinem Boden eine integrierte Kraftstofffalle (7) aufweist ;
3. Befestigen einer Kraftstoffversorgungspumpe (3) am Boden des Einfüllrohrs (2), im Inneren oder oben an der Kraftstofffalle (7) ; und
4. Montieren der aus dem Rohr (2)/der Pumpe (3)/der Kraftstofffalle (7) bestehenden Einheit am Kraftstofftank (1) in einer solchen Weise, dass die Kraftstofffalle (7) am Boden des Kraftstofftanks (1) liegt,
**dadurch gekennzeichnet, dass** die aus dem Einfüllrohr (2)/der Pumpe (3)/der Kraftstofffalle (7) bestehende Baugruppe an einer seitlichen Öffnung des Tanks (1) in der Nähe seines Bodens fest fixiert wird, nachdem die Pumpe (3) und die Kraftstofffalle (7) durch diese Öffnung eingeführt wurden.

## Revendications

1. Système à carburant destiné à un moteur thermique et comprenant un réservoir à carburant (1), une tubulure de remplissage du réservoir (2) et une pompe d'alimentation du moteur en carburant (3), la pompe (3) étant fixée à la tubulure de remplissage du réservoir (2) qui intègre un piège à carburant (7) situé sur le fond du réservoir à carburant (1) et comprenant la pompe (3) à l'intérieur ou sur lui, **caractérisé en ce que** la tubulure (2)/pompe (3)/piège à carburant (7) sont pré-assemblés en une unité qui est solidarisée à une ouverture latérale du réservoir (1) située à proximité du fond du réservoir (1) après insertion de la pompe (3) et du piège à carburant (7) au travers de l'ouverture.

2. Système à carburant selon la revendication précédente, **caractérisé en ce que** le réservoir (1) est en matière plastique et la tubulure (2) est en métal.

3. Système à carburant selon la revendication précédente, **caractérisé en ce que** le réservoir (1) est une structure multicouche incluant au moins une couche à base de HDPE (polyéthylène haute densité) et au moins une couche à base d'EVOH (copolymère éthylène-alcool vinylique).

4. Système à carburant selon l'une quelconque des revendications précédentes, **caractérisé en ce que** le piège à carburant (7) comprend une mousse sur laquelle repose la pompe (3).

5. Système à carburant selon l'une quelconque des revendications précédentes, **caractérisé en ce que** la tubulure de remplissage (2) comprend un goulot de remplissage (2') et une embase (4) intégrant le piège à carburant (7) qui délimitent la partie interne de la tubulure (2), et **en ce que** cette partie interne de la tubulure (2) intègre, outre la pompe (3), au moins un autre accessoire destiné à l'alimentation du moteur en carburant et/ou au contrôle du niveau de carburant dans le réservoir.

6. Système à carburant selon la revendication précédente, **caractérisé en ce que** cet autre élément est choisi parmi un filtre à carburant (5), un régulateur de pression (6) et/ou un système de jaugeage (8).

7. Système à carburant selon la revendication précédente, **caractérisé en ce que** cet autre élément est un système de jaugeage (8) qui est relié à la pompe (3), et **en ce que** ce système est basé sur une pesée, un effet inductif ou un effet Hall.

8. Système à carburant selon l'une quelconque des revendications 5 à 7, **caractérisé en ce que** la tubulure de remplissage (2) comprend un volume externe (2") délimité par une pièce rapportée sur le goulot (2') et/ou sur l'embase (4) et **en ce que** ce volume externe (2") intègre au moins un élément du circuit de ventilation et/ou du circuit de dégazage.

9. Système à carburant selon l'une quelconque des revendications 5 à 8, **caractérisé en ce que** le réservoir comprend une bride séparée (20) sur le dessus du réservoir au travers de laquelle s'étendent une ligne à carburant et/ou des connexions électriques de la pompe à carburant (3).

10. Procédé pour la fabrication d'un système à carburant selon l'une quelconque des revendications précédentes, comprenant les étapes suivantes :
1. fabrication d'un réservoir à carburant (1) ;
2. fabrication d'une tubulure de remplissage (2) pour ledit réservoir (1), ladite tubulure (2) intégrant un piège à carburant (7) sur son fond ;
3. fixation d'une pompe d'alimentation en carburant (3) au bas de ladite tubulure (2), à l'intérieur ou sur le piège à carburant (7) ; et
4. assemblage de l'ensemble tubulure(2)/pompe (3)/piège à carburant (7) au réservoir à carburant (1) de telle sorte que le piège à carburant (7) est situé sur le fond du réservoir à carburant (1)
**caractérisé en ce que** l'ensemble tubulure (2)/pompe (3)/piège à carburant (7) est solidarisé sur une ouverture latérale du réservoir (1) située à proximité du fond du réservoir (1) après insertion de la pompe (3) et du piège à carburant (7) au travers de l'ouverture.
